(19) Europäisches Patentamt
European Patent Office
Office européen des brevets

(11) EP 2 902 936 B1

(12) **EUROPEAN PATENT SPECIFICATION**

(45) Date of publication and mention
of the grant of the patent:
**17.04.2019 Bulletin 2019/16**

(51) Int Cl.:
**G06F 21/52** (2013.01)     **G06F 5/14** (2006.01)
**G06F 21/60** (2013.01)     **G06F 21/72** (2013.01)
**G06F 7/58** (2006.01)

(21) Application number: **15152875.9**

(22) Date of filing: **28.01.2015**

(54) **Information processing apparatus**

Informationsverarbeitungsvorrichtung

Appareil de traitement d'informations

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2014 JP 2014017232**

(43) Date of publication of application:
**05.08.2015 Bulletin 2015/32**

(73) Proprietor: **Hitachi, Ltd.**
**Tokyo 100-8280 (JP)**

(72) Inventors:
• **Yoshida, Hirotaka**
**Chiyoda-ku, Tokyo 100-8280 (JP)**
• **Owada, Toru**
**Chiyoda-ku, Tokyo 100-8280 (JP)**
• **Kayashima, Makoto**
**Chiyoda-ku, Tokyo 100-8280 (JP)**

• **Okeya, Katsuyuki**
**Chiyoda-ku, Tokyo 100-8280 (JP)**

(74) Representative: **Mewburn Ellis LLP**
**City Tower**
**40 Basinghall Street**
**London EC2V 5DE (GB)**

(56) References cited:
**EP-A1- 2 045 956          US-A1- 2007 112 786
US-A1- 2009 216 910**

• **Marian Vrabel ET AL: "Adaptive Jitter Buffer
Implementation and VoIP QoS", Journal of
Information, Control and Management Systems,
1 January 2007 (2007-01-01), XP055192020,
Retrieved from the Internet:
URL:http://kifri.fri.uniza.sk/ojs/index.ph
p/JICMS/article/viewFile/1327/611 [retrieved on
2015-05-28]**

EP 2 902 936 B1

**Description**

BACKGROUND OF THE INVENTION

Field of the Invention

The present invention relates to an information processing apparatus. More particularly, the invention relates to the protection of communication between networked devices constituting a control system and to an information processing apparatus for protecting communication between equipment by use of a cryptographic processing method that involves generating random numbers.

Description of the Related Art

The control systems that support social infrastructure including railways, electricity, water and gas have been built within closed networks. Moreover, the control systems have used dedicated operating systems (OS) and protocols. These features set the control systems apart from information systems that have been opened up and networked since long ago, so that the control systems have been thought to be immune to security threat from virus-based attacks or not damaged even if attacked.

However, the control systems have been more frequently connected to the Internet than before. Also, general-purpose operating systems have begun to be adopted by the network apparatuses of the control systems. Furthermore, there have appeared viruses (specifically, Stuxnet) devised to attack the control systems.

Research institutes and business organizations of various countries including National Institute of Standards and Technology (NIST) in U.S., North American Electric Reliability Corporation (NERC) in U.S. and Centre for the Protection of National Infrastructure (CPNI) in U.K. have so far spearheaded the efforts to work out the security standards for control systems as part of the standards in the industry and in different countries. However, the need to establish internationally applicable security standards prompted the International Electrotechnical Commission (IEC) in 2009 to start creating universal standards for the security of the control systems.

Given such a trend, it has become necessary for the control systems to introduce and implement security functions and security measures equivalent to those of information systems for protection against threats aimed at the control systems.

Cryptographic technology, being a well-known security technology, protects the confidentiality of stored data and communication data. Since the cryptographic technology is also capable of authenticating destinations of communication and detecting falsification of data, it is a fundamental art of security measures. From now on, utilization of the cryptographic technology in the devices making up the control system is expected to grow in importance for the sake of protecting the control system.

Meanwhile, the control system is required to activate valves or actuators on the basis of the information from sensors so as to maintain the current pressure or temperature levels. These processes are carried out by control devices including controllers.

In addition, the control processes are cyclical operations that are carried out at in a short cycle. The processing thus involves frequently updating data.

The content of communications between control devices includes measurement data coming from sensors as well as control data sent to actuators. These data need to be kept confidential. Meanwhile, in order to secure confidentiality when the cryptographic technology is applied to the control system, strict speed requirements are imposed on cryptographic processing that needs to be performed in a short cycle. Furthermore, the controllers to be installed need to be numerous and made available at low cost. This entails having to adopt low-cost CPUs in the controllers. Calculation resources for use in the cryptographic processing (CPU power and usable memory capacity) are thus limited.

Effective and well-known means for meeting the strict speed requirements on the cryptographic technology includes block cipher counter (CTR) mode, electronic codebook (ECB) mode, cipher block chaining (CBC) mode, and stream cipher encryption. CTR mode and stream cipher are characterized in that the processing involved may be divided into the following two phases:

> Phase 1: random number generation process
> Phase 2: exclusive-OR process

Phase 1 can be performed independently of target plain text to be processed. This phase may thus be executed before the plain text is finalized. On the assumption that phase 1 can be performed beforehand, the process of phase 2 needs to be performed after the plain text is finalized. Hence, the process of phase 2 is a very light load. For this reason, the cipher that can be divided into two phases can be processed at a high speed.

Meanwhile, the ECB mode and CBC mode cannot be divided into two phases. After plain text is finalized, these modes need to be executed as a heavy load. That is, the ECB mode and CBC mode cannot be executed at high speed through division and prior execution of the processing.

In the CTR mode, approximately the same amount of random numbers as the amount of data to be encrypted is generated beforehand from a secret key and an initial vector and then stored into a random number storage buffer. However, for security reasons, the same random number sequence cannot be used repeatedly for encrypting different target data. Thus necessary quantities of random number sequences must be generated at a suitable timing in keeping with cryptographic processing.

Generally, keys for cryptography are shared by both parties, the keys being different for each communication destination. It follows that a random number must be generated out of a different key for each different communication destination. Thus if a control device communicates with as many as "n" devices, that control device needs to prepare a buffer space that stores "n" random numbers for the communication destinations.

Even if there are sufficient random numbers for encryption in the random number buffer at a given point in time, a large amount of random numbers may have been consumed so far for a specific communication destination and the buffer may subsequently develop underflow for that destination. If necessary random numbers cannot be used at a suitable timing, the real-time communication with the communication destination may be adversely affected.

In applying cryptography to the control system, it is effective to encrypt the encryption region of not the entire target data but only of a necessary part thereof through what is known as partial encryption. The partial encryption involves using data called a mask to specify a region to be protected and another region that need not be protected in terms of security concerns such as confidentiality and integrity, so that cryptographic processing will be applied only to the protected region.

In communications that utilize the partial encryption, a system user or a system administrator can boost security for a certain time period by increasing the encryption region of the target data while the communication with a particular destination of a control server is continuing during a particular period. Supporting this function (i.e., encryption boost function) is effective for enhancing the security of control systems from now on. To implement the encryption boost function requires routinely accumulating random numbers during system operations so that the amount of random numbers to be used during cryptographic processing may be increased over a predetermined time period.

Taken together, the techniques for effectively guaranteeing the security of the control system involve applying appropriate buffer control to the prior generation of random number sequences required for cryptographic processing so that buffer underflow may be prevented and that the stored random number sequences may be utilized as needed for improvement in security at a future time.

JP-A-2005-223914 discloses a technique applicable to the transmission of digital video data through a broadband communication system covering cable TV and satellite TV networks, the technique being used to implement at low cost a device for changing the transmission rate of video data prior to communication via a set-top box (STB) and/or a number of intermediate nodes constituting a network.

According to the technique of JP-A-2005-223914, the transmission rate of MPEG-2 data can be adjusted at low cost by only use of a buffer control system. In particular, when a receiving unit receives and retransmits MPEG-2 data, buffer underflow or overflow in the receiving unit is prevented so that the MPEG-2 data may be retransmitted effectively.

US2007/0112789-A1 System and Method for Providing
Content over a Network
EP2045956 A1 Communication System and
Communication Method
US2009/0216910 A1 Computing Infrastructure

SUMMARY OF THE INVENTION

The invention is defined by the appended claims.

The control system is subject to the following preconditions:

(1) The load on the control device varies because it receives data in cycles that may or may not coincide with one another.
(2) The cycle in which to transmit data varies from one communication destination to another. Also, the cycle is on the order of milliseconds, which results in strict time constraints on processing.

Under the constraints (1) and (2) above, applying the cryptographic technology to the control system requires that a random number storage buffer be provided for each communication destination and that suitable buffer control be performed to prevent buffer underflow. However, the technique of Patent Literature 1 has the following problems:

(1) When a situation in which buffer underflow is likely to occur is predicted, the operation to read buffered data from the buffer is stopped, which triggers jitter in communication.
(2) It is difficult to supply a suitable number of random numbers to a suitable buffer at a suitable timing.
(3) At times of communication with a specific destination through partial encryption, attempts to boost security for a predetermined time period (encryption boost) by increasing the encryption region of the target data raise concerns about jitter.

Taken together, what is required is as follows: cryptographic communication should be carried out with all communication destinations without causing jitter. At times of communication with a specific destination, the control device should perform encryption boost by generating random numbers on the basis of the load condition of the device, so that in view of the remaining amount of random numbers in each of the buffers under control, a suitable buffer may be supplied with a suitable amount of generated random numbers at a suitable timing. Depending on the communication destination, the buffer therefor should be suitably filled with random numbers for encryption boost.

In order to solve the above-described problems, the present invention envisages providing a control system formed by control devices and a network, the control system having means that protects through cryptographic processing the communication between the control device performing a transmission process and the control device performing a reception process. The control devices making up the control system each include: buffers that store random numbers in accordance with communication destinations; a random number generation unit having a storage buffer control unit, a buffer remaining mount monitoring unit and a load condition monitoring unit; and an online cryptographic processing unit. On the basis of the input of CPU non-utilization rate, the remaining amount of random numbers in the random number buffer for each communication destination, information about whether each of the buffers supports encryption boost, and the amount of random numbers expected to be consumed within a predetermined time period, the control device dynamically generates random numbers needed by all buffers in a predetermined time period, calculates the amount of random numbers needed by each buffer, and supplies each buffer with a necessary amount of generated random numbers.

In solving the above problems and according to the present invention, there is provided an information processing apparatus as set forth in claim 1.

According to the present invention, a control device that ensures communication channel security through high-speed cryptographic processing can conduct cryptographic communication with all communication destinations without causing jitter even under a heavy CPU load.

BRIEF DESCRIPTION OF THE DRAWINGS

Preferred embodiments of the present invention will now be described in conjunction with the accompanying drawings, in which;

FIG. 1 is a block diagram explaining a structure of a control system of which the communication is protected.
FIG. 2 is a block diagram explaining a structure of the hardware of a transmission device and a reception device.
FIG. 3 is a sequence diagram between the transmission device and the reception device.
FIG. 4 is a flowchart of an offline random number generation process in the transmission device and reception device.
FIG. 5 is a flowchart for determining the amount of random numbers to be generated by a buffer control unit.
FIG. 6 is a flowchart for measuring the amount of random numbers to be generated by the buffer control unit.
FIG. 7 is another flowchart of measuring the amount of random numbers to be generated by the buffer control unit.
FIG. 8 is another flowchart for determining the amount of random numbers to be generated by the buffer control unit.
FIG. 9 shows a format of a header generated by a header generation unit.
FIG. 10 shows a format of encrypted transmitted data/encrypted received data.
FIG. 11 is a tabular view explaining a priority policy in assigning a margin random number.
FIG. 12 is a block diagram explaining a structure of a transmission device in Example 2.
FIG. 13 is another sequence diagram between the transmission device and the reception device.
FIG. 14 is a flowchart of an offline mask generation process.
FIG. 15 is a flowchart for determining the amount of masks to be generated by the buffer control unit.
FIG. 16 is a flowchart for measuring the amount of masks to be generated by the buffer control unit.
FIG. 17 is a block diagram explaining a structure of the transmission device.

DESCRIPTION OF THE PREFERRED EMBODIMENTS

Some embodiments of the present invention will be explained below by use of examples and with reference to the accompanying drawings.

EXAMPLE 1

(Structure of the control system)

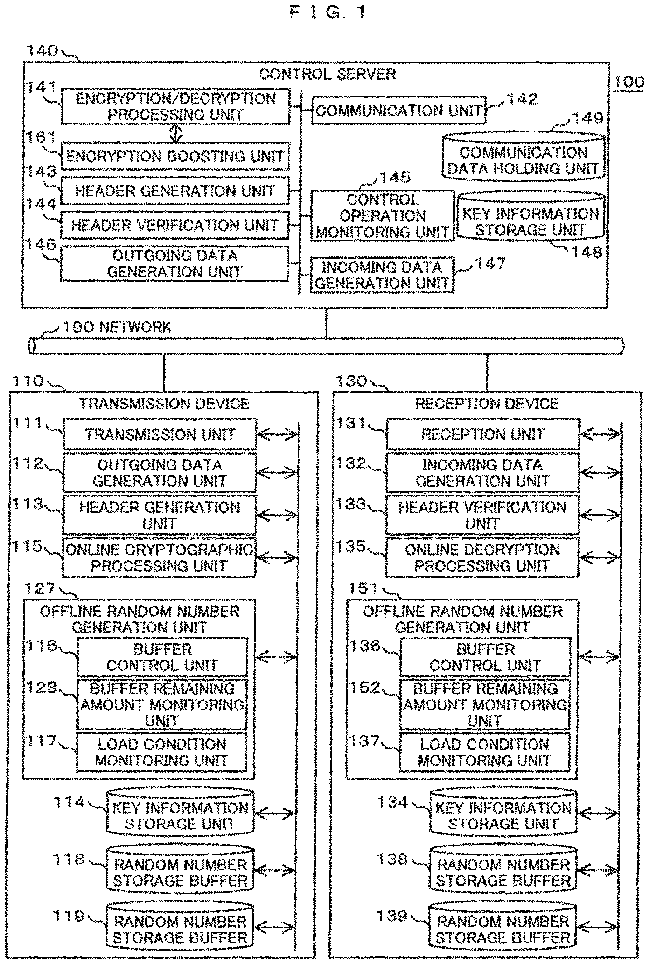

The structure of the control system will now be explained with reference to FIG. 1. In FIG. 1, the control system 100 is structured to include a transmission device 110, a reception device 130, a control server 140, and a communication network 190. In the control system 100, the reception device 130 receives instructions from the control server 140 via the communication network 190 and performs some control action accordingly. Moreover, the reception device 130 in the control system 100 receives transmitted data from the transmission device 110 and carries out some control action accordingly. The control server 140 in the control system 100 receives transmitted data from the transmission device 110 and executes some processing accordingly.

In FIG. 1, the control system 100 is shown to include one transmission device 110 that has transmitting functionality, one reception device 130 that has receiving functionality and one control server 140, for purpose of simplification. Alternatively, there may be multiple units of each of the component devices configured to make up the system. As another alternative, the transmission device 110 that has the transmitting functionality may also include receiving functionality, and the reception device 130 that has the receiving functionality may also include transmitting functionality.

(Transmission device)

The transmission device 110 is structured to include a transmission unit 111, an outgoing data generation unit 112, a header generation unit 113, a key information storage unit 114, an online cryptographic processing unit 115, an offline random number generation unit 127, a random-number-for-server storage buffer 118, and a random-number-for-reception-device storage buffer 119.

The transmission device 110 encrypts data to be subjected to cryptographic processing acquired from a control application running on the device 110. After generating transmission packets by adding a header to the encrypted data, the transmission device 110 transmits the transmission packets to the reception device 130 or to the control server 140. The random number storage buffer, storing random numbers necessary for cryptographic communication, is provided for each of communication destinations.

The transmission device 110 retrieves necessary random numbers from the random number storage buffer of the data to be subjected to cryptographic processing, the random number storage buffer for the communication destination. The online cryptographic processing unit 115 performs the exclusive OR operation using the random numbers. The outgoing data generation unit 112 generates outgoing data from the encrypted data and the header generated by the header generation unit 113. The transmission unit 111 transmits the outgoing data to the control server 140 or to the reception device 130.

The key information storage unit 114 stores the secret key and its related information. The transmission unit 111 transmits data to the outside. The random-number-for-server storage buffer 118 is a buffer that is for the communication with the control server 140. The random-number-for-reception-device storage buffer 119 is a buffer that is for the communication with the reception device 130. The online cryptographic processing unit 115 performs cryptographic processing based on the input of data to be subjected to cryptographic processing and the data from either the random-number-for-server storage buffer 118 or random-number-for-reception-device storage buffer 119.

The offline random number generation unit 127 generates, out of the secret key and an initial vector, random numbers prior to cryptographic processing without the input of data to be subjected to cryptographic processing. The offline random number generation unit 127 is structured to include a buffer control unit 116, a buffer remaining amount monitoring unit 128, and a load condition monitoring unit 117.

The offline random number generation unit 127 generates a total number of random numbers determined in view of the load condition of the transmission device monitored by the load condition monitoring unit 117. The buffer control unit 116 distributes the generated random numbers to the random number storage buffer for the communication destination. The random number storage buffer stores the random numbers.

The buffer control unit 116 controls the random-number-for-server storage buffer 118 and random-number-for-reception-device storage buffer 119. The load condition monitoring unit 117 monitors the load condition of the transmission device 110. The buffer remaining amount monitoring unit 128 monitors the remaining amount of the random number storage buffer.

It should be noted that the transmission device 110 has two random number storage buffers, i.e., the random-number-for-server storage buffer 118 and random-number-for-reception-device storage buffer 119 which are for two communication destinations. Alternatively, the transmission device 110 may have three or more buffers for a greater number of communication destinations.

(Reception device)

The reception device 130 is structured to include a reception unit 131, an incoming data generation unit 132, a header verification unit 133, a key information storage unit 134, an online decryption processing unit 135, an offline random number generation unit 151, a random number storage buffer 138, and another random number storage buffer 139.

The reception unit 130 retrieves random numbers from the random number storage buffer of data to be decrypted, the random number storage buffer being for the reception destination. The online decryption processing unit 135 performs decryption processing using the retrieved random numbers. The incoming data generation unit 132 generates payload data out of the incoming data on the basis of the decrypted data and of the result of header verification by the header verification unit 133. The reception device 130 acquires the data and performs control accordingly.

The key information storage unit 134 stores a secret key and its related information. The reception unit 131 receives data from the outside. The random number storage buffer 138 is a buffer that is for the communication with the control server 140. The random number storage buffer 139 is a buffer for the communication with the transmission device 110. The online decryption processing unit 135 performs decryption processing given the input of the encrypted data (data to be decrypted) and the data from within the random number storage buffer 138 or 139. The incoming data generation unit 132 generates the received data. The header verification unit 133 verifies the header of the received data.

The offline random number generation unit 151 generates random numbers by means of the secret key and from an initial vector prior to decryption processing without inputting the encrypted data. The offline random number generation unit 151 is structured to include a buffer control unit 136, a buffer remaining amount monitoring unit 152, and a load condition monitoring unit 137. The offline random number generation unit 151 generates a total number of random numbers determined in accordance with the load condition of the reception device 130 monitored by the load condition monitoring unit 137. The buffer control unit 136 distributes the generated random numbers to the random number storage buffer for the communication destination. The random number storage buffer stores the random numbers.

The buffer control unit 136 controls the random number storage buffers 138 and 139. The load condition monitoring unit 137 monitors the load condition of the reception unit 130. The buffer remaining amount monitoring unit 152 monitors the remaining amount in the random number storage buffers.

It should be noted that the reception device 130 has two random number storage buffers, i.e., the transmission device-specific random number storage buffer 138 and control random-number-for-server storage buffer 139 for two transmission sources. Alternatively, the reception device 130 may have three or more buffers for a greater number of communication sources.

(Control server)

The control server 140 is structured to include an encryption/decryption processing unit 141, a communication unit 142, a header generation unit 143, a header verification unit 144, a control operation monitoring unit 145, an outgoing data generation unit 146, an incoming data generation unit 147, a key information storage unit 148, a communication data holding unit 149, and an encryption boosting unit 161.

Upon data transmission, the encryption/decryption processing unit 141 performs an encryption process on the data to be subjected to cryptographic processing. The outgoing data generation unit 146 generates the outgoing data from the encrypted data and from the header generated by the header generation unit 143. The communication unit 142 transmits the generated data to the transmission device 110 or to the reception device 130.

Upon data reception, the encryption/decryption processing unit 141 performs a decryption process on the data to be decrypted. The incoming data generation unit 147 generates payload data out of the incoming data on the basis of the decrypted data and of the result of header verification by the header verification unit 144. The control server 140 acquires the generated data and performs control accordingly. The key information storage unit 148 stores a secret key and its related information. The control operation monitoring unit 145 monitors the communication between the transmission device and the reception device as well as control operation status. The communication unit 142 communicates with the outside. The communication data holding unit 149 holds communication data. The encryption boosting unit 161 boosts the security of cryptographic communication with a specific device by increasing the amount of random numbers used for cryptographic processing at intervals of a time period specified by a system administrator.

It should be noted that the transmission device 110, reception device 130, and control server 140 are an information processing apparatus each.

(Hardware structure of the control device)

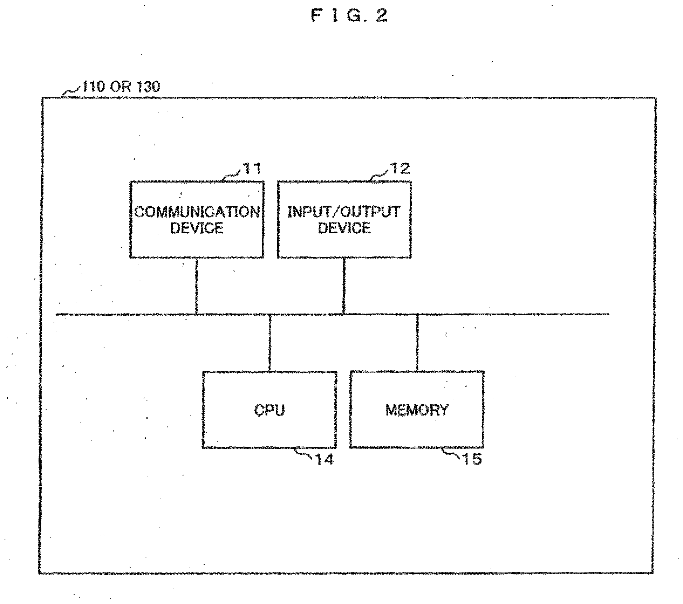

The hardware of the transmission device 110 and reception device 130 will now be explained with reference to FIG. 2. In FIG. 2, the transmission device 110 and reception device 130 are each structured to include a communication device 11, an input/output device 12, a CPU 14, and a memory 15.

The CPU 14 performs calculations. The input/output device 12 inputs signals from sensors and outputs signals to actuators. The memory 15 temporarily holds the result of processing. The communication device 11 communicates with the sensors or actuators. In addition, the communication device 11 communicates with the transmission device 110 (or reception device 130) and with the control server 140.

(Flow of cryptographic communication between the transmission device and the reception device)

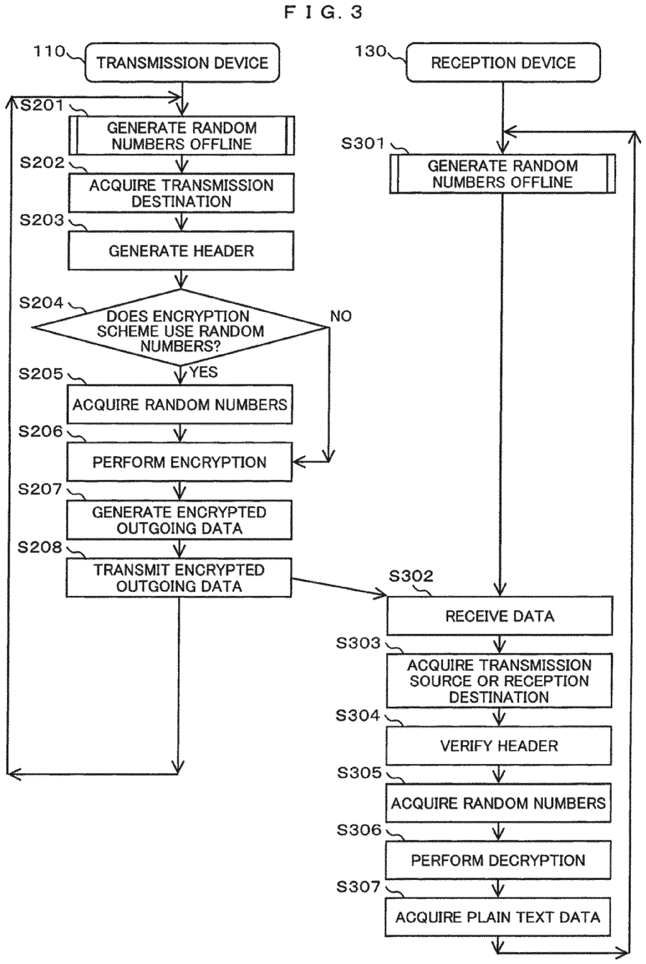

Explained below with reference to FIG. 3 is a flow in which the transmission device 110 encrypts plain text data before transmitting the encrypted data that is received and decrypted by the reception device 130 so as to acquire payload data. In FIG. 3, prior to an encrypted data transmission process, the offline random number generation unit 127 of the transmission device 110 performs an offline random number generation process (S201) that can be accomplished without inputting data to be encrypted. The transmission device 110 acquires the transmission destination (S202) before the encrypted data transmission process. The transmission device 110 generates a header (S203) on the basis of a cryptographic algorithm for encryption and of an initial vector. The transmission device 110 determines whether the cryptographic algorithm used for encryption makes use of random numbers (S204). If the result of the determination is affirmative ("Yes"), the transmission device 110 acquires random numbers from the random-number-for-reception-device storage buffer 119 (S205). If the result of the determination in step 204 is negative ("No"), the transmission device 110 skips step 205.

The online cryptographic processing unit 115 encrypts plain text data using the acquired random numbers to obtain the encrypted data (S206). The outgoing data generation unit 112 generates encrypted outgoing data using the header and encrypted data (S207). Here, a message authentication code (MAC) for modification detection may be generated and attached to the encrypted outgoing data. The transmission unit 111 transmits the encrypted outgoing data (S208). After transmitting the encrypted outgoing data, the transmission device 110 returns to the random number generation process (S201) and repeats the subsequent steps. In carrying out the transmission process as described above, the transmission device 110 performs cryptographic processing while dynamically generating random numbers during system operation.

Before the encrypted data transmission process, the offline random number generation unit 127 of the reception device 130 performs an offline random number generation process (S301) that can be accomplished without inputting the data to be encrypted. The reception unit 131 receives the encrypted transmitted data (S302) for an encrypted data reception process. The reception unit 131 acquires the transmission source or the reception destination from the received data (S303). The reception device 130 verifies the header to acquire the cryptographic algorithm and initial vector for use at the time of decryption (S304) . A modification detection process may be carried out as needed here. Specifically, if the MAC is found to be attached to the transmitted data, the reception device 130 calculates the MAC of the target data and refers to the MAC attached to the transmitted data for the sake of modification detection. The reception device 130 acquires the random numbers for the transmission source from the random number storage buffer (S305). The online decryption processing unit 135 acquires plain text data (payload data) by decrypting the encrypted text using the acquired random numbers (S307) . After acquiring the payload data, the reception device 130 returns to the random number generation process (S301) and repeats the subsequent steps. As described, the reception device 130 performs decryption processing while dynamically generating random numbers during system operation.

(Flow of offline random number generation)

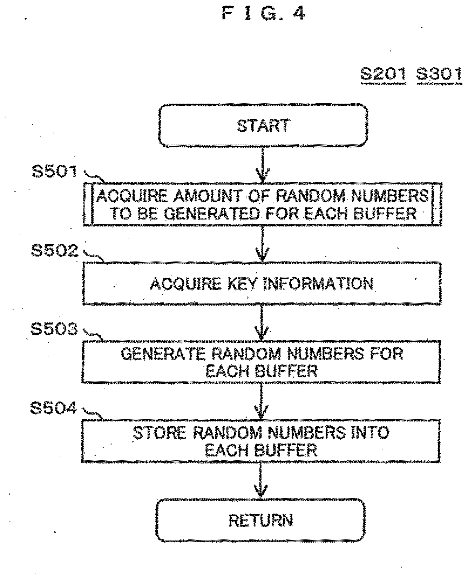

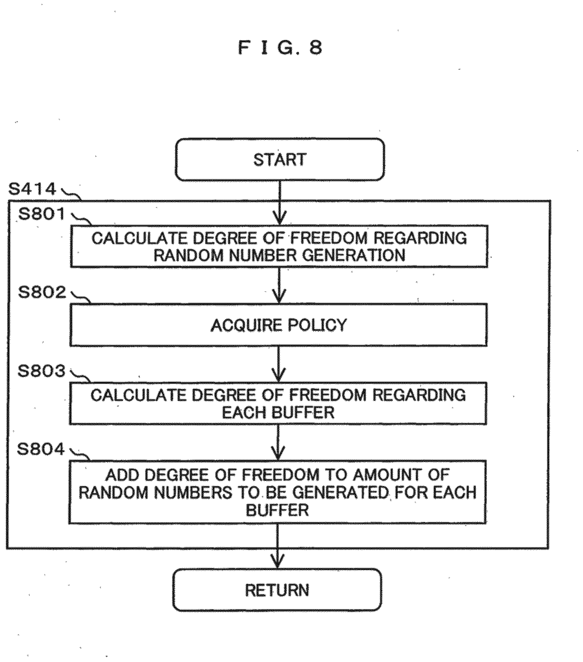

Explained below with reference to FIG. 4 is the offline random number generation process used by the transmission device and reception device for conducting cryptographic communication in accordance with the communication destination. Although the offline random number generation process will be explained with reference to FIG. 4 or 8 as a process to be carried out by the transmission device, the reception device also performs the same process.

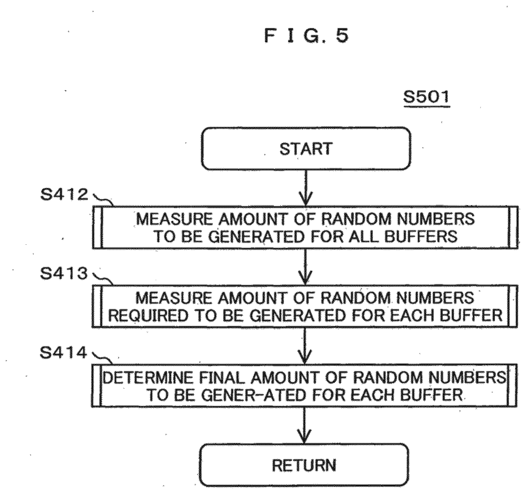

In FIG. 4, the offline random number generation unit 127 acquires the amount of random numbers to be generated for each of the random number storage buffers 118 and 119 (S501). The flow for determining the amount of random numbers to be generated for each buffer will be explained later with reference to FIG. 5. The offline random number generation unit 127 acquires key information from the key information storage unit 114 (S502). By inputting the acquired key information to the cryptographic algorithm, the offline random number generation unit 127 generates the acquired amount of random numbers to be generated for each of the random number storage buffers 118 and 119 (S503) . The offline random number generation unit 127 stores the generated random numbers into the random number storage buffers 118 and 119 (S502) and returns to the beginning of the flow.

(Flow for determining the amount of random numbers for each buffer)

Explained below with reference to FIG. 5 is the flow for determining the amount of random numbers to be generated by the buffer control unit 116 for each of the random-number-for-server storage buffer 118 and random-number-for-reception-device storage buffer 119. In FIG. 5, the buffer control unit 116 measures the amount of random numbers to be generated for all buffers, i.e., the random-number-for-server storage buffer 118 and random-number-for-reception-device storage buffer 119 (S412). This amount is defined as the total amount of random numbers to be generated for all buffers. The buffer control unit 116 also measures the amount of random numbers required to be generated for each buffer (S413) . This amount is defined as the buffer-dependent necessary amount of random numbers. The buffer control unit 116 finally determines the amount of random numbers to be generated for each buffer (S414), and returns to the beginning of the flow. This amount is defined as the buffer-dependent final amount of random numbers to be generated.

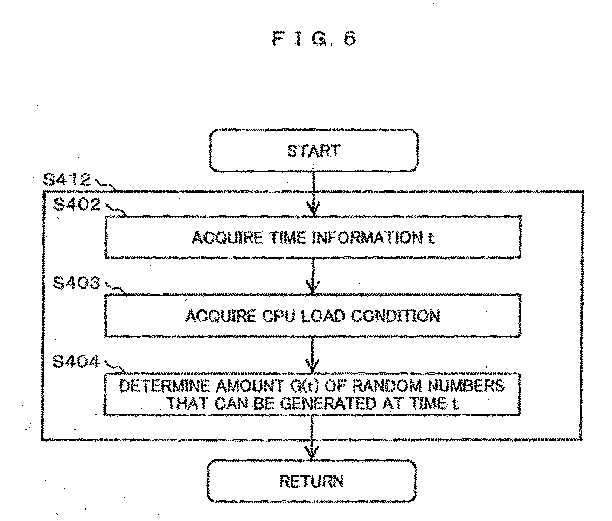

Each of the above processes will be discussed later in detail with reference to FIGS. 6, 7 and 8.

(Definitions of the terms regarding the processes in the basic flow of buffer control)

Preparatory to explaining each of the processes in the basic flow of buffer control, some relevant terms are defined as follows:

> $G(t)$, as the amount of random numbers (in bytes) to be generated at time t;
> $b_i(t)$, as the amount of random numbers to be generated for an i-th buffer $BUF_i$ at time t;
> $c_i(t)$, as the amount of random numbers to be consumed from the i-th buffer $BUF_i$ at time t; and
> $r_i(t)$, as the amount of random numbers remaining in the i-th buffer $BUF_i$ at time t; and
> $C_i(t)$, as the amount of random numbers to be consumed from the i-th buffer $BUF_i$ at time t+T0, where TO is a predetermined positive number.

Here, $G(t)$ is dependent on the non-utilization rate of the CPU in the device that generates random numbers at time t. The higher the CPU non-utilization rate is, the larger the value of $G(t)$ is.

Moreover, $C_i(t)$ is given by the following mathematical expression 1 that integrates $c_i(x)$ from time t to time t+T0:

$$C_i(t) = \int_t^{t+T0} C_i(x)dx \ldots (\text{Exp. } 1)$$

The following requirements are conceivable for communication with the control system:

- Requirement 1: $C_i(t)$ should be determined by the amount of data communicated with the target control system. The value $C_i(t)$ may be obtained during system trial operation, for example.
- Requirement 2: At a given time in a given buffer, the amount of random numbers should be larger than 0 for cryptographic processing to be carried out, i.e., buffer underflow should not occur. That is, $r_i(t) \geq 0$ in a given buffer $BUF_i$ at a given time t.
- Requirement 3: At time t, the sum of the amounts of random numbers to be generated for and assigned to each of the buffers involved (total buffer count: n) should be $G(t)$ or less. That is, the following expression 2 should be met:

$$b1(t) + b2(t) + \ldots + bn(t) \leq G(t) \ldots (\text{Exp. } 2)$$

On the basis of the definitions, terms, and requirements described above, the individual processes making up the flow of processing performed by the buffer control unit will be explained below. Here, random numbers are generated beforehand in a manner meeting the above requirements 1 through 3. If any of the requirements is not met, random numbers may be generated alternatively at the timing of cryptographic processing (i.e., on-the-fly random number generation).

(Detailed flow of the process (S412) of measuring the amount of random numbers to be generated for all buffers)

Explained here with reference to FIG. 6 is the flow in which the buffer control unit 116 measures the amount of random numbers to be generated for all buffers. In FIG. 6, the transmission device 110 acquires time information t (S402). The transmission device 110 obtains CPU load condition by acquiring the non-utilization rate of the CPU (S403). On the basis of the CPU load condition thus acquired, the transmission device 110 determines (S404) the total amount $G(t)$ of random numbers to be generated for and distributed to the random number storage buffers for the transmission destinations, and returns to the beginning of the process.

(Detailed flow of the process (S413) of measuring the amount of random numbers required to be generated for each buffer)

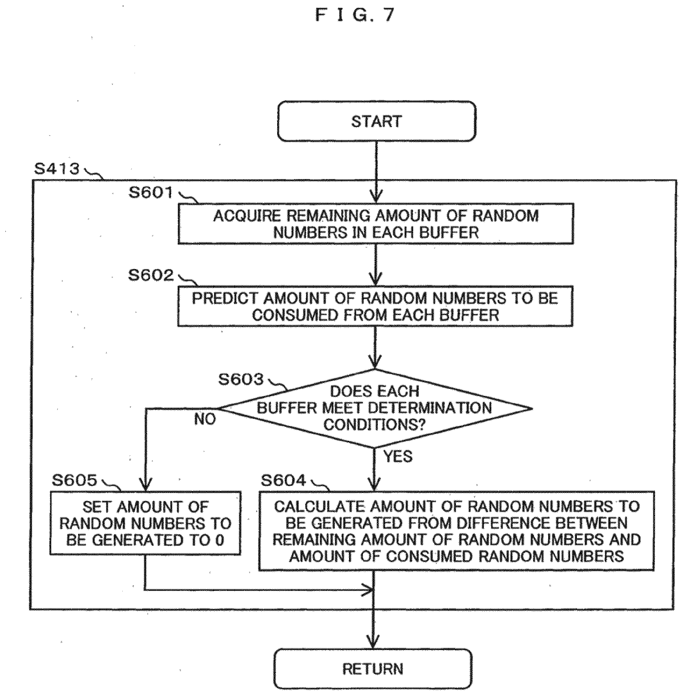

Explained here with reference to FIG. 7 is the flow in which the buffer control unit 116 measures the amount of random numbers required to be generated for all buffers. In FIG. 7, the buffer remaining amount monitoring unit 128 acquires (S601) the remaining amount of random numbers $r_i(t)$ in the i-th (i=1, 2) buffer BUF(i) at time t. The buffer remaining amount monitoring unit 128 predicts the amount of random numbers to be consumed from each buffer by calculating the amount of random numbers $C_i(t)$ to be consumed from the i-th buffer BUF(i) over a time period ranging from time t to time t+T0 (S602).

$C_i(t)$ is calculated by integrating $c_i(x)$ from time t to time t+T0. Moreover, the amount $C_i(t)$ of random numbers to be consumed from the time of acquisition to a predetermined time may be predictably calculated through the use of communication data periodicity or other characteristics.

The buffer remaining amount monitoring unit 128 determines (S603) whether each buffer i meets the conditions of $C_i(t)-r_i(t)>0$. If the result of the determination is affirmative ("Yes"), the buffer remaining amount monitoring unit 128 calculates (S604) the amount of random numbers $b_i(t)=C_i(t)-r_i(t)$ to be generated for the i-th buffer BUF(i), and returns to the beginning of the process.

If the result of the determination in step 603 is negative ("No"), the buffer remaining amount monitoring unit 128 sets $b_i(t)=0$, i.e., sets (S605) the amount of random numbers to be generated to 0 and returns to the beginning of the process. Steps 601 to 605 are carried out on all buffers.

(Flow of the process (S414) of determining the final amount of random numbers to be generated for each buffer)

Explained here with reference to FIG. 8 is the flow in which the buffer control unit 116 determines the amount of random numbers to be generated for each buffer. In FIG. 8, the buffer control unit 116 calculates (S801) the degree of freedom $F(t)$ regarding random number generation as follows: $F(t)=G(t)-[b_1(t)+b_2(t)+ ... b_n(t)]$. The buffer control unit 116 then acquires (S802) the policy regarding random number generation. On the basis of the policy thus acquired, the buffer control unit 116 calculates (S803) the degree of freedom $f_i(t)$ regarding each buffer.

With regard to each buffer, the buffer control unit 116 adds the degree of freedom $f_i(t)$ to the amount $b_i(t)$ of random numbers to be generated, i.e., the buffer control unit 116 calculates (S804) $b_i(t)=b_i(t)+i(t)$, and returns to the beginning of the process. The buffer control unit 116 determines the amount $b_i(t)$ as the final amount of random numbers to be generated for the buffer $b_i(t)$.

(Structure of the header)

Explained below is the structure of diverse items of information to be used in various steps of cryptographic processing, i.e., the format of data for actual cryptographic communication between the transmission device 110 and the reception device 130.

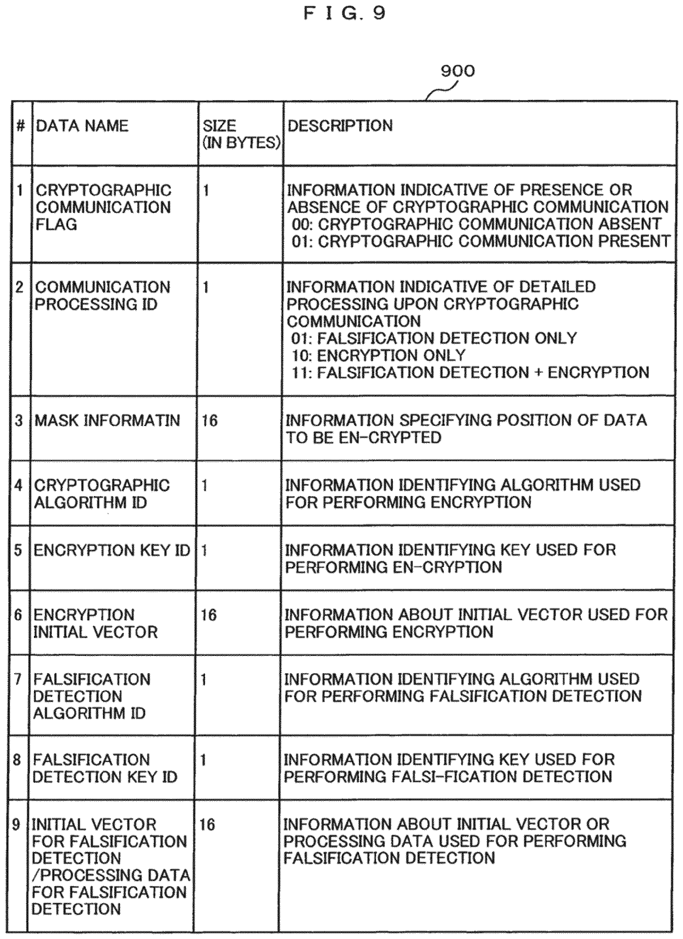

Explained here with reference to FIG. 9 is the structure of the header generated by the header generation unit 113 in a protected communication system that uses partial encryption. In the ensuing description, the symbol # representing the number n in FIG. 9 is used to denote each of the items involved with a reference numeral 900-n (n=1 to 9).

In FIG. 9, a header 900 includes a cryptographic communication flag 900-1, a communication processing ID 900-2, mask information 900-3, cryptographic algorithm ID 900-4, an encryption key ID 900-5, an initial vector for encryption 900-6, a modification detection algorithm ID 900-7, a modification detection key ID 900-8, and initial vector for modification detection/processing data for modification detection 900-9.

The cryptographic communication flag 900-1 is information indicative of the presence or absence of cryptographic communication. The communication processing ID 900-2 is information indicative of detailed processing carried out at the time of cryptographic communication. The mask information 900-3 is information for identifying the position of the data to be encrypted. The cryptographic algorithm ID 900-4 is information for identifying the algorithm used for performing encryption. The encryption key ID 900-5 is information for identifying the key used for performing encryption. The initial vector for encryption 900-6 is information about the initial vector used for performing encryption. The modification detection algorithm ID 900-7 is information for identifying the algorithm used for performing modification detection. The modification detection key ID 900-8 is information for identifying the key used for performing modification detection. The initial vector for modification detection/processing data for modification detection 900-9 is information about the initial vector and processing data used for performing modification detection.

When the cryptographic communication flag 900-1 is set to "01," encryption and decryption processing is carried out. The cryptographic algorithm ID 900-4, encryption key ID 900-5, and initial vector for encryption 900-6 are used by the online cryptographic processing unit 115 and online decryption processing unit 135. The cryptographic communication flag 900-1, communication processing ID 900-2, and mask information 900-3 are also information necessary for encryption and decryption.

The modification detection algorithm ID 900-7, modification detection key ID 900-8, and initial vector for modification detection/processing data for modification detection 900-9 make up a MAC for use by a cryptographic processing unit 115 and a decryption processing unit 135.

When the cryptographic communication flag 900-1 is set to "00," encryption and decryption processing is not carried out. In such a case, the data 900-2 through 900-9 in FIG. 9 do not exist.

It should be noted here that because the structure of data packets transmitted and received in cryptographic communication is dependent on the layer (IP layer or transport layer) for performing cryptographic processing, the components of the header 900 and their sizes are not limited to those listed in FIG. 9. Also, the order in which the components of the header 900 are arranged is not limited to what is shown in FIG. 9.

(Structure of encrypted outgoing data/encrypted incoming data)

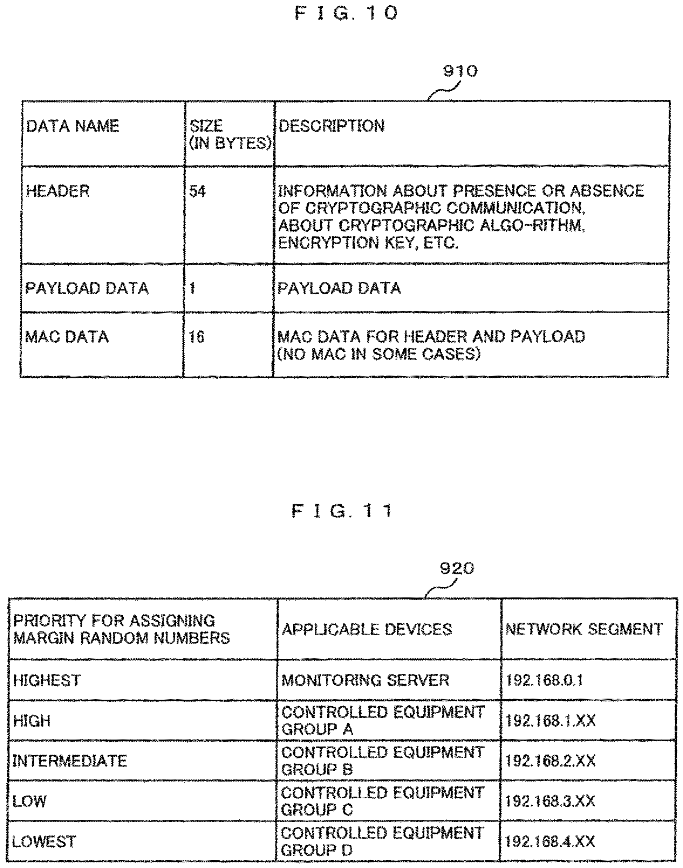

Described below with reference to FIG. 10 is the structure of encrypted outgoing data/encrypted incoming data communicated between the transmission device 110 and the reception device 130 in the protected communication system 100 that uses partial encryption. In the ensuing description, the number n representing each row in the table of FIG. 10 is used to denote each of the items involved with a reference numeral 910-n (n=1 to 3).

The encrypted outgoing data/encrypted incoming data 910 is configured to include a header 910-1 that indicates the presence or absence of cryptographic communication, the cryptographic algorithm, the encryption key and other information; payload data 910-2; and MAC data 910-3 regarding the header and payload data.

The header 910-1 includes the data 900-1 through 900-9 shown in FIG. 9. The payload data 910-2 contains plain text or a set of some other plain text not to be encrypted and encrypted data.

It should be noted here that the elements of the encrypted outgoing data/encrypted incoming data 910 are not limited to those listed in FIG. 10. The cryptographic algorithm ID 900-4 and the encryption key ID 900-5 are necessary for identifying the cryptographic algorithm and the encryption key, respectively, at the time of cryptographic processing. Moreover, the order in which the components of the encrypted outgoing data/encrypted incoming data 910 are arranged is not limited to what is shown in FIG. 10.

(Margin random number assignment policy)

The policy to be acquired in step 802 of FIG. 8 will be explained here with reference to FIG. 11. In FIG. 11, the transmission device 110 performs priority-based grouping of the equipment configured in the protected communication system 100. The transmission device 110 assigns margin random numbers in accordance with the priority. In order to make the assignments, the transmission device 110 refers to the policy 920 of priority for assigning margin random numbers.

According to Example 1 explained above, the control device ensures the security of communication channels through high-speed cryptographic processing without causing jitter even when the load on the CPU is increased due to reception congestion, the control device being further capable of continuing cryptographic communication with all communication destinations.

Further according to Example 1, it is possible to accumulate random numbers for use in cryptographic processing by utilizing the remaining power of the CPU. Given this feature, if the system administrator determines at a given point in time that the security of cryptographic communication needs to be enhanced, the system administrator may utilize the function known as the encryption boost function to increase the security of cryptographic communication at intervals of a specified time period.

EXAMPLE 2

(Control device that dynamically generates masks for use under a partial encryption scheme)

In the case of Example 1, which is implemented as a general encryption scheme by which the entire payload is to be encrypted or as a partial encryption scheme, the processing of block cipher counter mode that can be divided and executed in advance involves: outputting the necessary amount of random numbers to be generated beforehand as needed for cryptographic processing at a suitable timing; and assigning the output random number data appropriately to the buffers for the transmission destinations.

Meanwhile, unlike Example 1, Example 2 works only under the scheme of partial encryption in which the payload is made up of a part to be encrypted and an unencrypted part. Under the partial encryption scheme, masks that constitute the data for determining the protected region of the payload vary depending on the communication destination and on the application in use. When the communication destination is changed or when the communication destination remains the same but the application is changed, the masks are required to be changed as well. This requirement must be met by carrying out the process of generating or changing the masks. An effective method of generating secure mask data involves cryptographically generating random numbers as the mask data. However, this method is subject to high calculation cost so that unless suitably performed, the method can adversely affect the real-time nature necessary for the control operation.

Thus Example 2 supports the partial encryption scheme by performing the process of dynamically generating secure masks for the communication destination without adversely affecting the control operation. With Example 2, the processing of the partial encryption scheme is divided into two processes: a preliminary process of generating masks, and a process of carrying out partial encryption using the masks. A necessary amount of masks generated in the mask generation process is output as needed during cryptographic processing at a suitable timing. The output masks are assigned appropriately to the buffers for the communication destinations.

In the use case of Example 2, when a new application is introduced, the region to be protected in the payload is specified by the application. It follows that new masks for the application need to be generated. In particular, when an application is dynamically introduced, the masks should preferably be changed dynamically so that the control system will operate continuously.

Different masks are to be used for different communication destinations. In general, the longer the data length of masks is, the more detailed control options are available regarding information protection and non-protection. Thus in accordance with the priority of the protection, the length of masks may be varied from one communication destination to another.

In dynamically generating and changing masks, it is not necessary to replace the current mask completely with the changed mask. If the changed mask is longer than the current mask, the newly generated bits may be coupled to the current mask to form an extended mask that can be used as the changed mask.

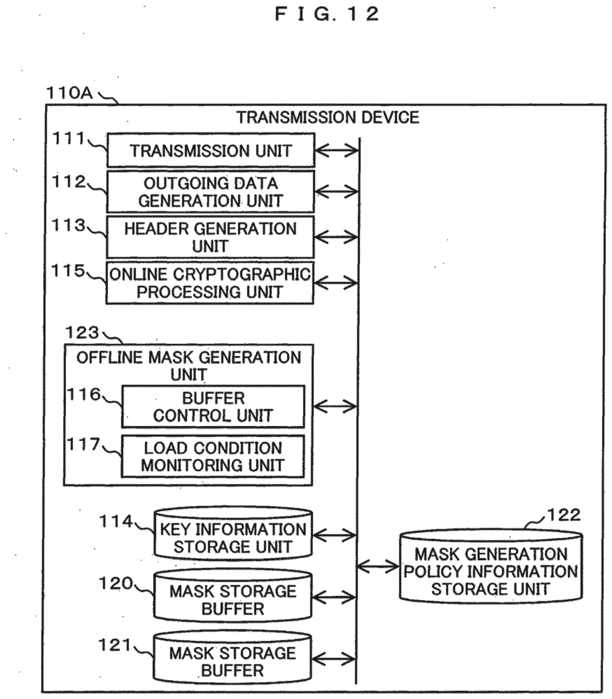

The structure of the control device of Example 2 will now be explained with reference to FIG. 12. In FIG. 12, a transmission device 110A is structured to include a transmission unit 111, an outgoing data generation unit 112, a header generation unit 113, a key information storage unit 114, an online cryptographic processing unit 115, an offline mask generation unit 123, a mask storage buffer 120, another mask storage buffer 121, and a mask generation policy information storage unit 122.

The transmission device 110A performs cryptographic processing under the partial encryption scheme by which only the part to be encrypted of communication packets is encrypted. Here, the transmission device 110A uses masks as the data for specifying the part to be encrypted of packets to be encrypted.

The transmission device 110A retrieves masks from the mask storage buffer of the data to be subjected to cryptographic processing, the mask storage buffer being for the transmission destination. Using the retrieved masks, the online cryptographic processing unit 115 carries out cryptographic processing. The outgoing data generation unit 112 generates outgoing data from the encrypted data and a header generated by the header generation unit 113. The transmission unit 111 transmits the generated outgoing data to the control server 140 or to the reception device 130.

The key information storage unit 114 stores a secret key and its related information. The transmission unit 111 transmits data to the outside. The mask storage buffer 120 is a buffer that is for the communication with the control server 140. The mask storage buffer 121 is a buffer for the communication with the reception device 130 that performs reception processing. The online cryptographic processing unit 115 performs cryptographic processing given the input of the data to be subjected to cryptographic processing and of the data from the above-mentioned mask storage buffer 120 or 121.

The offline mask generation unit 123 generates masks prior to cryptographic processing without the input of the data to be subjected to cryptographic processing. The offline mask generation unit 123 includes a buffer control unit 116 and a load condition monitoring unit 117. The offline mask generation unit 123 generates masks. The buffer control unit 116 distributes the generated masks to the buffers for the communication destinations. The mask storage buffers 120 and 121 store the distributed masks.

The buffer control unit 116 controls the mask storage buffers 120 and 121. The load condition monitoring unit 117 monitors the load condition of the transmission device.

The transmission device 110A performs the process of generating masks dynamically through the use of these processing units.

It should be noted that, the transmission device 110A of Example 2 has two mask storage buffers 120 and 121 for two transmission destinations. Alternatively, the transmission device 110A may have three or more buffers for a greater number of communication destinations.

(Flow of cryptographic communication between the transmission device 110A and the reception device 130)

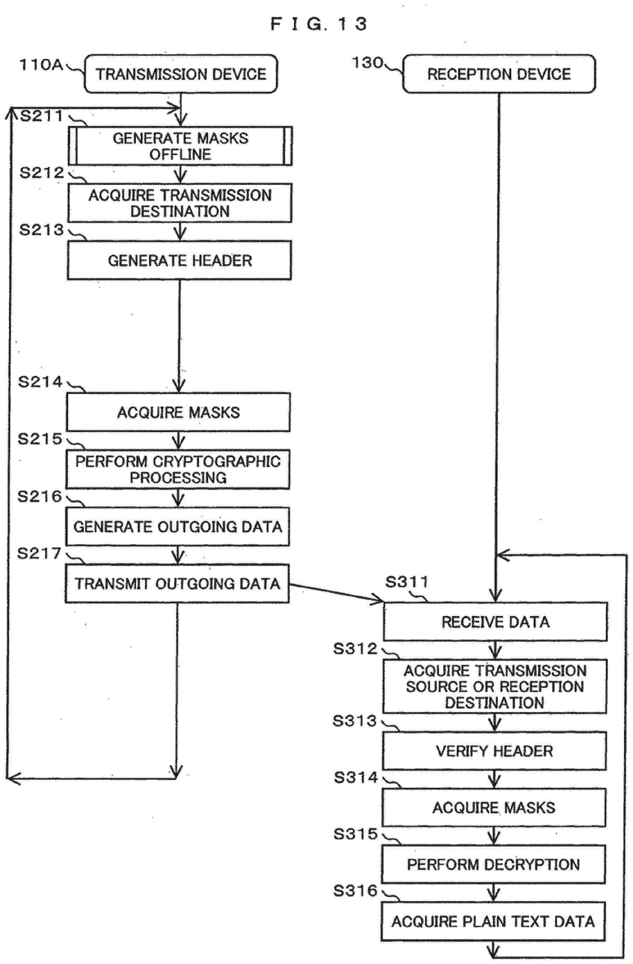

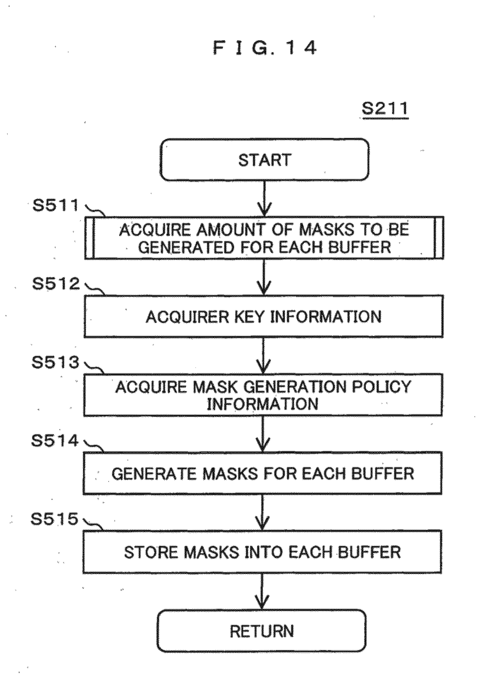

Explained here with reference to FIG. 13 is the flow in which the transmission device 110A encrypts plain text data and transmits the encrypted data that is received and decrypted by the reception device 130A so as to acquire payload data. In FIG. 13, prior to the process of encrypted data transmission, the transmission device 110A performs a mask generation process (S211) that can be performed without inputting the data to be encrypted. The offline mask generation process will be discussed later in detail with reference to FIG. 14.

The transmission device 110A acquires (S212) the transmission destination prior to the process of transmitting encrypted data. The transmission device 110A generates (S213) the header by use of a cryptographic algorithm and an initial vector for encryption. The transmission device 110A then acquires (S214) the masks for the transmission destination from the mask storage buffer 120.

The transmission device 110A acquires encrypted data (S215) by performing the process of partially encrypting the plain text data using the acquired masks. The transmission device 110A then generates outgoing data (S216) using the header and the encrypted data. Here, the outgoing data may be subjected to the process of modification detection as needed. Also, data may be partially extracted from the outgoing data so as to generate a message authentication code for the modification detection process. The transmission device 110A transmits the outgoing data (S217). Following transmission of the encrypted outgoing data, the transmission device 110A returns to the mask generation process (S211) and restarts the process. In this manner, the transmission device 110A that performs transmission processing carries out cryptographic processing while dynamically generating masks during system operation.

In an encrypted data reception process, the reception device 130 receives (S311) the encrypted outgoing data. From the received data, the reception device 130 acquires (S312) the transmission source or the reception destination. The reception device 130 verifies the received data to acquire (S313) the cryptographic algorithm and the initial vector for use in decryption. Here, the received data may be subjected to the process of modification detection as needed.

The reception device 130 acquires (S314) the masks for the transmission source from the received data or from the mask storage buffer. Using the acquired masks, the reception device 130 retrieves and decrypts (S315) the part to be encrypted of the received data. The reception device 130 thus acquires plain text data (S316) before transitioning to step 311.

(Flow of offline mask generation)

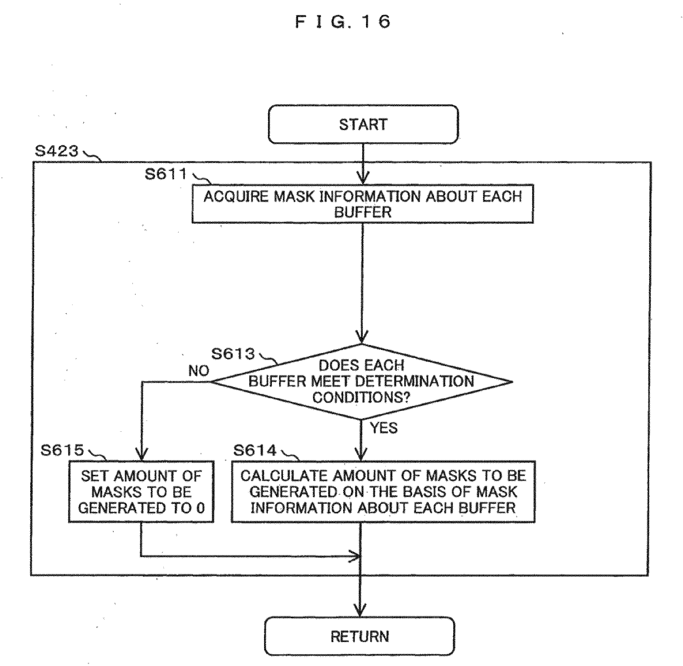

Explained below with reference to FIG. 14 is the process of generating masks offline for use in cryptographic communication with the communication destination. In FIG. 14, the offline mask generation unit 123 acquires (S511) the amount of masks to be generated for each of the mask storage buffers 120 and 121. The flow for determining the amount of masks to be generated for each buffer will be discussed later in detail with reference to FIG. 16.

The mask generation unit 123 acquires (S512) key information from the key information storage unit 114. From the mask generation policy information storage unit 122, the mask generation unit 123 acquires mask generation policy information (S513). The mask generation unit 123 calculates a mask generation algorithm using the acquired information as the input, and generates (S514) the acquired amount of masks to be generated with regard to the mask storage buffer 120. The mask generation unit 123 stores (S515) the generated masks into the mask storage buffer 120, and returns to the beginning of the process. It should be noted that it is the system administrator, application administrator, or user that establishes the mask generation policy.

(Flow for determining the amount of masks for each buffer)

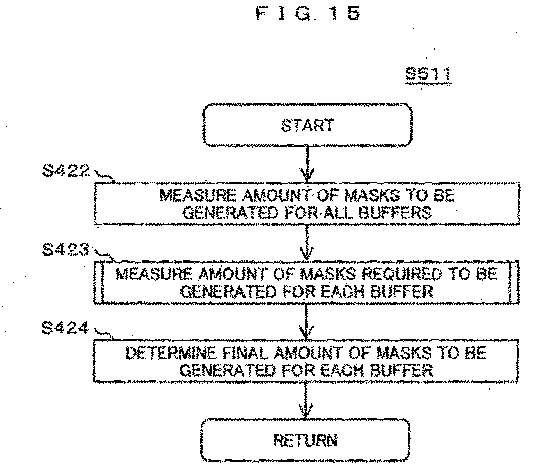

Explained here with reference to FIG. 15 is the process performed by the buffer control unit 116 to determine the amount of masks to be generated for each of the mask storage buffers 120 and 121. In FIG. 15, the buffer control unit 116 measures (S422) the amount of masks to be generated for the mask storage buffers 120 and 121. The mask generation unit 123 measures (S423) the amount of masks required to be generated for each buffer. The mask generation unit 123 then determines (S424) the final amount of masks to be generated for each buffer, and returns to the beginning of the process.

A more detailed process of step 423 will be discussed later in detail with reference to FIG. 16. Step 424 will not be discussed further since the same process can be performed when random numbers are replaced with masks in each of the processes in FIGS. 6 and 8 carried out in Example 1.

(Detailed flow of the process (S423) of measuring the amount of masks required to be generated for each buffer)

Explained here with reference to FIG. 16 is the process performed by the buffer control unit 116 to measure the amount of masks to be generated for all buffers. In FIG. 16, the mask generation unit 123 acquires (S611) mask information about the currently used masks as well as about the length of the masks. The mask generation unit 123 determines (S613) whether the amount of masks to be generated for each buffer is larger than 0. If the result of the determination is affirmative ("Yes"), the mask generation unit 123 calculates (S614) the amount of masks to be generated for the buffer and returns to the beginning of the process. If the result of the determination in step 613 is negative ("No"), the mask generation unit 123 sets the amount of masks to be generated to 0, and returns to the beginning of the process.

The amount of masks may be calculated on the basis of the mask information acquired in step 611. Specifically, where the new mask is generated by attaching additional bits to the current mask, solely the amount of the newly added bits may be considered to be the amount of masks to be generated.

EXAMPLE 3

(Transmission device that performs the process of dynamically generating an intermediate value of the hash-based message authentication code (HMAC))

It was explained in connection with Example 1 that cryptographic processing is performed to implement data protection for ensuring the confidentiality of the data to be handled by the control system. With Example 3, by contrast, the process of modification detection is carried out for data protection that ensures the authenticity of the data to be handled by the control system. Hash-based Message Authentication Code has been known as a standard technique for detecting data falsification.

As with CTR mode and stream cipher of Example 1, HMAC is characterized in that its processing may be divided into two phases: an intermediate hash value generation process, and a MAC generation process. The intermediate hash value can be generated independently of the plain text to be handled. This means that intermediate hash value generation can be executed in advance (i.e., before the plain text is finalized).

However, unlike Example 1, if the plain text data made up of n+1 blocks is to be processed, what can be calculated in advance is only the process of invoking a hash function one time, serving as built-in cryptographic primitives. The process of invoking the hash function n times corresponding to the remaining n blocks cannot be performed beforehand.

However, where the data to be handled typically by control systems is generally shorter than the data dealt with by information systems, it is effective to separate the preliminary process from cryptographic processing and execute the former process independently of the latter. With Example 1, random numbers are generated beforehand for each plain text and consumed every time the plain text is encrypted. With Example 3, by contrast, the process of generating the intermediate hash value is carried out only when the key is set or changed. That is, the generated intermediate hash value can be utilized continuously and not consumed until the key is set or changed next time. For this reason, as with Example 1, Example 3 has buffers that store intermediate hash values as the data generated in the preliminary process. However, unlike Example 1, Example 3 is not provided with the buffer remaining amount monitoring unit.

In generating the hash-based message authentication code, it is possible to calculate the intermediate hash value beforehand using only the key as the input, before the data to be detected is acquired. Meanwhile, the preliminary process usually entails cost associated with the process of generating the intermediate hash value by calculating a hash function on one block of data. Because the control system performs its processing at intervals of a short time period on the order of milliseconds, failure to perform this process appropriately can adversely affect control operation.

The use case here is one in which when the key for use with HMAC is dynamically updated, the intermediate hash value updated with the preceding key is invalidated. This requires that an intermediate hash value be calculated anew by use of the updated key. Example 3 is arranged appropriately to perform this calculation process in a manner not adversely affecting the control operation. The use case associated with Example 3 is one in which the process of generating the intermediate hash value is carried out in situations where numerous communication destinations are grouped and the key is updated depending on each of these groups, e.g., where the key is updated for one group but not updated for the other groups. Here, the transmission device updates only the content of the buffer corresponding to the group of updated equipment, and does not update the content of the buffers for other groups. In particular, it is effective to apply Example 3 to situations where the determination to update or not to update the buffer content is made regarding each buffer.

The system structure of the transmission device in Example 3 is substantially the same as the system structure of Example 1 except that the transmission device 110 is replaced with a transmission device 110B.

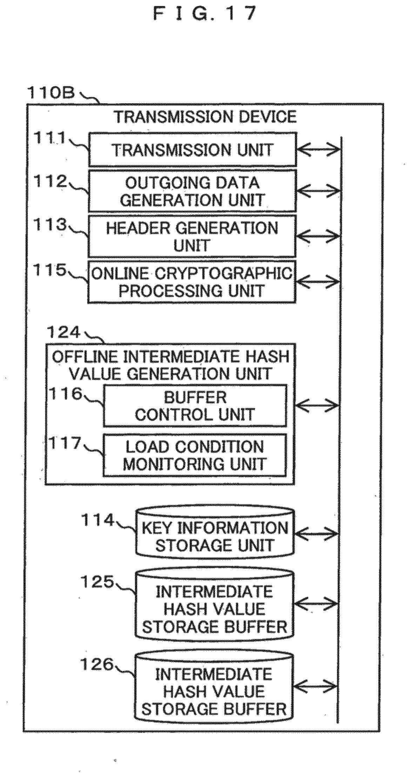

The structure of the transmission device in Example 3 will be explained here with reference to FIG. 17. In FIG. 17, the transmission device 110B performs cryptographic processing under the partial encryption scheme by which cryptographic processing is carried out only on the part to be encrypted of communication packets. Here, the transmission device 110B utilizes a message authentication scheme by which packets to be encrypted are protected for integrity.

The transmission device 110B includes a transmission unit 111, an outgoing data generation unit 112, a header generation unit 113, a key information storage unit 114, an online cryptographic processing unit 115, an offline intermediate hash value generation unit 124, an intermediate hash value storage buffer 125, and another intermediate hash value storage buffer 126.

The transmission device 110B retrieves the intermediate hash value from the intermediate hash value storage buffer of the data to be subjected to cryptographic processing, the intermediate hash value storage buffer being for the transmission destination. Using the retrieved intermediate hash value, the online cryptographic processing unit 115 carries out cryptographic processing. The outgoing data generation unit 112 generates outgoing data on the basis of the encrypted data and of the header generated by the header generation unit 113. The transmission unit 112 transmits the outgoing data to the control server 140 or to the reception device 130.

The key information storage unit 114 is a storage unit that stores a secret key and its related information. The transmission unit 111 transmits data to the outside. The intermediate hash value storage buffer 125 is a buffer that is for the communication with the control server 140. The intermediate hash value storage buffer 126 is a buffer for the communication with the reception device 130 that performs reception processing. The online cryptographic processing unit 115 carries out cryptographic processing given the input of the data to be subjected to cryptographic processing and of the data from the intermediate hash value storage buffer 125 or 126.

The offline intermediate hash value generation unit 124 generates the intermediate hash value prior to cryptographic processing without inputting the data to be subjected to cryptographic processing. The offline intermediate hash value generation unit 124 is structured to include a buffer control unit 116 and a load condition monitoring unit 117. The offline intermediate hash value generation unit 124 generates intermediate hash values. The buffer control unit 116 distributes the intermediate hash values to the buffers for the communication destinations, the intermediate hash values being generated by the offline intermediate hash value generation unit 124. The intermediate hash value storage buffers 125 and 126 store the intermediate hash values.

The buffer control unit 116 controls the intermediate hash value storage buffers 125 and 126. The load condition monitoring unit 117 monitors the load condition of the transmission device.

The transmission device 110B performs the process of dynamically generating intermediate hash values through the use of these processing units.

It should be noted that the transmission device 110B of Example 3 has two intermediate hash value storage buffers 125 and 126 for two transmission destinations. Alternatively, the transmission device 110B may have three or more buffers for a greater number of communication destinations.

A detailed process of communication performed in Example 3 will not be discussed further because the same process will be carried out in Example 1 if random numbers are replaced with intermediate hash values.

It should be understood that the present invention when embodied is not limited to the above-described embodiments and that various modifications, variations and alternatives may be made of the invention as long as they are within the scope of the appended claims. In any of such modifications, variations or alternatives, the processing performed by the entire system remains essentially unchanged.

**Claims**

1. An information processing apparatus, for implementing cryptographic communication without causing jitter, comprising:

   > a storage unit (114) that stores a secret key;
   > an offline processing unit (127) that generates random numbers by means of the secret key;
   > a plurality of buffer units (118, 119) that each store random numbers generated by the offline processing unit, each buffer unit being associated with a communication destination;
   > a calculation unit;
   > a load condition monitoring unit;
   > a buffer control unit (116);
   > and an online processing unit (115), for performing an encryption boost, wherein:

   >> the load condition monitoring unit acquires load condition of the calculation unit;
   >> the buffer control unit (116) determines the amount of random numbers to be generated on a basis of:

   >>> the load condition,

a number of random numbers in each of the plurality of buffer units, and
the communication destination, to thereby provide a suitable buffer with a suitable amount of generated random numbers at a suitable timing; and

wherein the online processing unit (115) generates second data on a basis of first data and of the random numbers thereby performing an encryption boost.

2. The information processing apparatus according to claim 1, wherein:

the first data is either data to be subjected to cryptographic processing or data to be decrypted, and
the second data is either encrypted data or decrypted data.

3. The information processing apparatus according to claim 1, wherein the offline processing unit (127) generates a mask serving as data for specifying a part of packets to be encrypted, the part being to be subjected to the cryptographic processing.

4. The information processing apparatus according to claim 1, wherein the offline processing unit (127) generates an intermediate hash value as a message authentication code based on a hash function.

**Patentansprüche**

1. Informationsverarbeitungsvorrichtung zum Umsetzen von kryptografischer Kommunikation, ohne Jitter-Schwankungen zu verursachen, Folgendes umfassend:

eine Speichereinheit (114), die einen geheimen Schlüssel speichert;
eine Offline-Verarbeitungseinheit (127), die mittels des geheimen Schlüssels Zufallszahlen generiert;
eine Vielzahl von Puffereinheiten (118, 119), die jeweils durch die Offline-Verarbeitungseinheit generierte Zufallszahlen speichert, wobei jede Puffereinheit einer Kommunikationsdestination zugeordnet ist;
eine Recheneinheit;
eine Lastzustandsüberwachungseinheit;
eine Puffersteuereinheit (116);
und eine Online-Verarbeitungseinheit (115) zum Durchführen einer Verschlüsselungserhöhung, wobei:

die Lastzustandsüberwachungseinheit den Lastzustand der Recheneinheit erfasst;
die Puffersteuereinheit (116) die zu erzeugende Menge an Zufallszahlen basierend auf Folgendem bestimmt:

dem Lastzustand,
einer Anzahl an Zufallszahlen in jeder der Vielzahl von Puffereinheiten und
der Kommunikationsdestination, um dadurch zu einer geeigneten Zeit eine geeignete Menge an generierten Zufallszahlen für einen geeigneten Puffer bereitzustellen; und
wobei die Online-Verarbeitungseinheit (115) zweite Daten basierend auf ersten Daten und den Zufallszahlen generiert, wodurch eine Verschlüsselungserhöhung durchgeführt wird.

2. Informationsverarbeitungsvorrichtung nach Anspruch 1, wobei:

die ersten Daten entweder Daten sind, die einer kryptografischen Verarbeitung zu unterziehen sind, oder Daten sind, die zu entschlüsseln sind, und
die zweiten Daten entweder verschlüsselte Daten oder entschlüsselte Daten sind.

3. Informationsverarbeitungsvorrichtung nach Anspruch 1, wobei die Offline-Verarbeitungseinheit (127) eine Maske generiert, die als Daten zum Spezifizieren eines zu verschlüsselnden Teils von Paketen dient, wobei der Teil der kryptografischen Verarbeitung zu unterziehen ist.

4. Informationsverarbeitungsvorrichtung nach Anspruch 1, wobei die Offline-Verarbeitungseinheit (127) basierend auf einer Hash-Funktion einen Hash-Zwischenwert als Nachrichtenauthentifizierungskode generiert.

**Revendications**

1.  Appareil de traitement d'informations, pour implémenter une communication cryptographique sans causer de gigue, comprenant :

    une unité de stockage (114) qui stocke une clé secrète ;
    une unité de traitement hors ligne (127) qui génère des nombres aléatoires au moyen de la clé secrète ;
    une pluralité d'unités de mémoire tampon (118, 119) qui stockent chacune des nombres aléatoires générés par l'unité de traitement hors ligne, chaque unité de mémoire tampon étant associée à une destination de communication ;
    une unité de calcul ;
    une unité de surveillance d'état de charge ;
    une unité de commande de mémoire tampon (116) ;
    et une unité de traitement en ligne (115), pour effectuer un renforcement de cryptage, dans lequel :

    l'unité de surveillance d'état de charge acquiert un état de charge de l'unité de calcul ;
    l'unité de commande de mémoire tampon (116) détermine la quantité de nombres aléatoires à générer sur la base de :

    l'état de charge,
    un nombre de nombres aléatoires dans chacune de la pluralité d'unités de mémoire tampon, et
    la destination de communication, pour fournir ainsi une mémoire tampon appropriée ayant une quantité appropriée de nombres aléatoires générés à un cadencement approprié ; et

    dans lequel l'unité de traitement en ligne (115) génère des secondes données sur la base de premières données et des nombres aléatoires, en réalisant ainsi un renforcement de cryptage.

2.  Appareil de traitement d'informations selon la revendication 1, dans lequel :

    les premières données sont des données à soumettre à un traitement cryptographique ou des données à décrypter, et
    les secondes données sont des données cryptées ou des données décryptées.

3.  Appareil de traitement d'informations selon la revendication 1, dans lequel l'unité de traitement hors ligne (127) génère un masque servant de données pour spécifier une partie de paquets à crypter, la partie devant être soumise au traitement cryptographique.

4.  Appareil de traitement d'informations selon la revendication 1, dans lequel l'unité de traitement hors ligne (127) génère une valeur de hachage intermédiaire en tant que code d'authentification de message sur la base d'une fonction de hachage.

F I G. 1

F I G. 2

110 OR 130

```
┌──────────────────┐   ┌──────────────────┐
│        11        │   │        12        │
│  COMMUNICATION   │   │   INPUT/OUTPUT   │
│     DEVICE       │   │     DEVICE       │
└──────────────────┘   └──────────────────┘

┌──────────────────┐   ┌──────────────────┐
│       CPU        │   │      MEMORY      │
│        14        │   │        15        │
└──────────────────┘   └──────────────────┘
```

18

F I G. 3

F I G. 4

S201 S301

```
                    ┌─────────────────┐
                    │      START       │
                    └─────────────────┘
                              │
                              ▼
S501  ┌────────────────────────────────────────┐
      │ ACQUIRE AMOUNT OF RANDOM NUMBERS        │
      │  TO BE GENERATED FOR EACH BUFFER        │
      └────────────────────────────────────────┘
                              │
                              ▼
S502  ┌────────────────────────────────────────┐
      │        ACQUIRE KEY INFORMATION          │
      └────────────────────────────────────────┘
                              │
                              ▼
S503  ┌────────────────────────────────────────┐
      │      GENERATE RANDOM NUMBERS FOR        │
      │             EACH BUFFER                 │
      └────────────────────────────────────────┘
                              │
                              ▼
S504  ┌────────────────────────────────────────┐
      │      STORE RANDOM NUMBERS INTO          │
      │             EACH BUFFER                 │
      └────────────────────────────────────────┘
                              │
                              ▼
                    ┌─────────────────┐
                    │     RETURN       │
                    └─────────────────┘
```

F I G. 5

S501

```
          ┌─────────────────────────┐
          │          START          │
          └─────────────────────────┘
                       │
                       ▼
S412 ┌──────────────────────────────────────────┐
     │      MEASURE AMOUNT OF RANDOM NUMBERS     │
     │       TO BE GENERATED FOR ALL BUFFERS     │
     └──────────────────────────────────────────┘
                       │
                       ▼
S413 ┌──────────────────────────────────────────┐
     │      MEASURE AMOUNT OF RANDOM NUMBERS     │
     │   REQUIRED TO BE GENERATED FOR EACH BUFFER│
     └──────────────────────────────────────────┘
                       │
                       ▼
S414 ┌──────────────────────────────────────────┐
     │  DETERMINE FINAL AMOUNT OF RANDOM NUMBERS │
     │     TO BE GENER-ATED FOR EACH BUFFER      │
     └──────────────────────────────────────────┘
                       │
                       ▼
          ┌─────────────────────────┐
          │          RETURN         │
          └─────────────────────────┘
```

F I G. 6

```
              ┌─────────────────────────┐
              │          START          │
              └─────────────────────────┘
                           │
S412 ┌─────────────────────┼─────────────────────────┐
S402 │ ┌───────────────────▼───────────────────────┐ │
     │ │      ACQUIRE TIME INFORMATION t            │ │
     │ └───────────────────┬───────────────────────┘ │
     │                     │                         │
S403 │ ┌───────────────────▼───────────────────────┐ │
     │ │      ACQUIRE CPU LOAD CONDITION            │ │
     │ └───────────────────┬───────────────────────┘ │
     │                     │                         │
S404 │ ┌───────────────────▼───────────────────────┐ │
     │ │ DETERMINE AMOUNT G(t) OF RANDOM NUMBERS    │ │
     │ │   THAT CAN BE GENERATED AT TIME t          │ │
     │ └───────────────────┬───────────────────────┘ │
     └─────────────────────┼─────────────────────────┘
                           │
              ┌────────────▼────────────┐
              │         RETURN          │
              └─────────────────────────┘
```

F I G . 7

```
                    ┌─────────────────┐
                    │      START      │
                    └────────┬────────┘
                             │
  S413 ┌──────────────────────────────────────────────────┐
       │  S601 ┌────────────────────────────────────────┐  │
       │       │  ACQUIRE REMAINING AMOUNT OF RANDOM     │  │
       │       │      NUMBERS IN EACH BUFFER             │  │
       │       └──────────────────┬─────────────────────┘  │
       │                          │                         │
       │  S602 ┌──────────────────▼─────────────────────┐  │
       │       │  PREDICT AMOUNT OF RANDOM NUMBERS TO BE │  │
       │       │      CONSUMED FROM EACH BUFFER          │  │
       │       └──────────────────┬─────────────────────┘  │
```

S603 — DOES EACH BUFFER MEET DETERMINATION CONDITIONS?

NO

YES

S605 — SET AMOUNT OF RANDOM NUMBERS TO BE GENERATED TO 0

S604 — CALCULATE AMOUNT OF RANDOM NUMBERS TO BE GENERATED FROM DIFFERENCE BETWEEN REMAINING AMOUNT OF RANDOM NUMBERS AND AMOUNT OF CONSUMED RANDOM NUMBERS

RETURN

F I G. 8

```
                          ┌─────────────────┐
                          │      START       │
                          └─────────────────┘
S414                              │
  ┌───────────────────────────────┼─────────────────────────┐
  │ S801                           ▼                         │
  │   ┌───────────────────────────────────────────────────┐ │
  │   │ CALCULATE DEGREE OF FREEDOM REGARDING             │ │
  │   │ RANDOM NUMBER GENERATION                          │ │
  │   └───────────────────────────────────────────────────┘ │
  │ S802                           │                         │
  │   ┌───────────────────────────▼───────────────────────┐ │
  │   │              ACQUIRE POLICY                        │ │
  │   └───────────────────────────────────────────────────┘ │
  │ S803                           │                         │
  │   ┌───────────────────────────▼───────────────────────┐ │
  │   │ CALCULATE DEGREE OF FREEDOM REGARDING             │ │
  │   │ EACH BUFFER                                       │ │
  │   └───────────────────────────────────────────────────┘ │
  │ S804                           │                         │
  │   ┌───────────────────────────▼───────────────────────┐ │
  │   │ ADD DEGREE OF FREEDOM TO AMOUNT OF               │ │
  │   │ RANDOM NUMBERS TO BE GENERATED FOR EACH          │ │
  │   │ BUFFER                                           │ │
  │   └───────────────────────────────────────────────────┘ │
  └───────────────────────────────┼─────────────────────────┘
                                  ▼
                          ┌─────────────────┐
                          │     RETURN       │
                          └─────────────────┘
```

F I G. 9

900

| # | DATA NAME | SIZE (IN BYTES) | DESCRIPTION |
|---|-----------|-----------------|-------------|
| 1 | CRYPTOGRAPHIC COMMUNICATION FLAG | 1 | INFORMATION INDICATIVE OF PRESENCE OR ABSENCE OF CRYPTOGRAPHIC COMMUNICATION 00: CRYPTOGRAPHIC COMMUNICATION ABSENT 01: CRYPTOGRAPHIC COMMUNICATION PRESENT |
| 2 | COMMUNICATION PROCESSING ID | 1 | INFORMATION INDICATIVE OF DETAILED PROCESSING UPON CRYPTOGRAPHIC COMMUNICATION 01: FALSIFICATION DETECTION ONLY 10: ENCRYPTION ONLY 11: FALSIFICATION DETECTION + ENCRYPTION |
| 3 | MASK INFORMATIN | 16 | INFORMATION SPECIFYING POSITION OF DATA TO BE EN-CRYPTED |
| 4 | CRYPTOGRAPHIC ALGORITHM ID | 1 | INFORMATION IDENTIFYING ALGORITHM USED FOR PERFORMING ENCRYPTION |
| 5 | ENCRYPTION KEY ID | 1 | INFORMATION IDENTIFYING KEY USED FOR PERFORMING EN-CRYPTION |
| 6 | ENCRYPTION INITIAL VECTOR | 16 | INFORMATION ABOUT INITIAL VECTOR USED FOR PERFORMING ENCRYPTION |
| 7 | FALSIFICATION DETECTION ALGORITHM ID | 1 | INFORMATION IDENTIFYING ALGORITHM USED FOR PERFORMING FALSIFICATION DETECTION |
| 8 | FALSIFICATION DETECTION KEY ID | 1 | INFORMATION IDENTIFYING KEY USED FOR PERFORMING FALSI-FICATION DETECTION |
| 9 | INITIAL VECTOR FOR FALSIFICATION DETECTION /PROCESSING DATA FOR FALSIFICATION DETECTION | 16 | INFORMATION ABOUT INITIAL VECTOR OR PROCESSING DATA USED FOR PERFORMING FALSIFICATION DETECTION |

25

FIG. 10

910

| DATA NAME | SIZE (IN BYTES) | DESCRIPTION |
|---|---|---|
| HEADER | 54 | INFORMATION ABOUT PRESENCE OR ABSENCE OF CRYPTOGRAPHIC COMMUNICATION, ABOUT CRYPTOGRAPHIC ALGO-RITHM, ENCRYPTION KEY, ETC. |
| PAYLOAD DATA | 1 | PAYLOAD DATA |
| MAC DATA | 16 | MAC DATA FOR HEADER AND PAYLOAD (NO MAC IN SOME CASES) |

FIG. 11

920

| PRIORITY FOR ASSIGNING MARGIN RANDOM NUMBERS | APPLICABLE DEVICES | NETWORK SEGMENT |
|---|---|---|
| HIGHEST | MONITORING SERVER | 192.168.0.1 |
| HIGH | CONTROLLED EQUIPMENT GROUP A | 192.168.1.XX |
| INTERMEDIATE | CONTROLLED EQUIPMENT GROUP B | 192.168.2.XX |
| LOW | CONTROLLED EQUIPMENT GROUP C | 192.168.3.XX |
| LOWEST | CONTROLLED EQUIPMENT GROUP D | 192.168.4.XX |

F I G. 1 2

F I G. 1 3

110A — TRANSMISSION DEVICE

130 — RECEPTION DEVICE

S211 — GENERATE MASKS OFFLINE

S212 — ACQUIRE TRANSMISSION DESTINATION

S213 — GENERATE HEADER

S214 — ACQUIRE MASKS

S215 — PERFORM CRYPTOGRAPHIC PROCESSING

S216 — GENERATE OUTGOING DATA

S217 — TRANSMIT OUTGOING DATA

S311 — RECEIVE DATA

S312 — ACQUIRE TRANSMISSION SOURCE OR RECEPTION DESTINATION

S313 — VERIFY HEADER

S314 — ACQUIRE MASKS

S315 — PERFORM DECRYPTION

S316 — ACQUIRE PLAIN TEXT DATA

F I G. 1 4

S211

```
          ┌─────────────────┐
          │      START       │
          └─────────────────┘
                   │
                   ▼
S511 ┌───────────────────────────────────┐
     │  ACQUIRE AMOUNT OF MASKS TO BE     │
     │    GENERATED FOR EACH BUFFER       │
     └───────────────────────────────────┘
                   │
                   ▼
S512 ┌───────────────────────────────────┐
     │      ACQUIRER KEY INFORMATION      │
     └───────────────────────────────────┘
                   │
                   ▼
S513 ┌───────────────────────────────────┐
     │   ACQUIRE MASK GENERATION POLICY   │
     │           INFORMATION              │
     └───────────────────────────────────┘
                   │
                   ▼
S514 ┌───────────────────────────────────┐
     │    GENERATE MASKS FOR EACH BUFFER  │
     └───────────────────────────────────┘
                   │
                   ▼
S515 ┌───────────────────────────────────┐
     │   STORE MASKS INTO EACH BUFFER     │
     └───────────────────────────────────┘
                   │
                   ▼
          ┌─────────────────┐
          │      RETURN      │
          └─────────────────┘
```

F I G. 1 5

S511

```
        ┌─────────────────────┐
        │        START        │
        └─────────────────────┘
                  │
                  ▼
```

S422 ┌──────────────────────────────────────────┐
     │  MEASURE AMOUNT OF MASKS TO BE           │
     │  GENERATED FOR ALL BUFFERS               │
     └──────────────────────────────────────────┘
                  │
                  ▼
S423 ┌──────────────────────────────────────────┐
     │  MEASURE AMOUNT OF MASKS REQUIRED TO BE   │
     │  GENERATED FOR EACH BUFFER               │
     └──────────────────────────────────────────┘
                  │
                  ▼
S424 ┌──────────────────────────────────────────┐
     │  DETERMINE FINAL AMOUNT OF MASKS TO BE    │
     │  GENERATED FOR EACH BUFFER               │
     └──────────────────────────────────────────┘
                  │
                  ▼
        ┌─────────────────────┐
        │       RETURN        │
        └─────────────────────┘

F I G. 1 6

```
                          ┌──────────────────┐
                          │      START       │
                          └──────────────────┘
                                   │
                                   ▼
S423
┌──────────────────────────────────────────────────────────────────────┐
│  S611                                                                  │
│        ┌──────────────────────────────────────────────┐               │
│        │  ACQUIRE MASK INFORMATION ABOUT EACH BUFFER    │               │
│        └──────────────────────────────────────────────┘               │
│                                   │                                    │
│                                   ▼                                    │
│              S613                                                      │
│         NO       ╱──────────────────────────────╲                     │
│     ┌───────────╱    DOES EACH BUFFER MEET        ╲                    │
│     │           ╲    DETERMINATION CONDITIONS?    ╱                    │
│     │            ╲──────────────────────────────╱                     │
│     │                           │ YES                                 │
│     ▼                           ▼                                     │
│  S615                        S614                                     │
│ ┌──────────────┐  ┌────────────────────────────────────┐             │
│ │ SET AMOUNT OF│  │ CALCULATE AMOUNT OF MASKS TO BE     │             │
│ │ MASKS TO BE  │  │ GENERATED ON THE BASIS OF MASK      │             │
│ │ GENERATED    │  │ INFORMATION ABOUT EACH BUFFER       │             │
│ │ TO 0         │  └────────────────────────────────────┘             │
│ └──────────────┘                │                                     │
│     │                           │                                     │
│     └───────────────────────────┤                                     │
└──────────────────────────────────────────────────────────────────────┘
                                   │
                                   ▼
                          ┌──────────────────┐
                          │     RETURN       │
                          └──────────────────┘
```

FIG. 17

110B — TRANSMISSION DEVICE

111 — TRANSMISSION UNIT

112 — OUTGOING DATA GENERATION UNIT

113 — HEADER GENERATION UNIT

115 — ONLINE CRYPTOGRAPHIC PROCESSING UNIT

124 — OFFLINE INTERMEDIATE HASH VALUE GENERATION UNIT

116 — BUFFER CONTROL UNIT

117 — LOAD CONDITION MONITORING UNIT

114 — KEY INFORMATION STORAGE UNIT

125 — INTERMEDIATE HASH VALUE STORAGE BUFFER

126 — INTERMEDIATE HASH VALUE STORAGE BUFFER

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005223914 A
- US 20070112789 A1
- EP 2045956 A1
- US 20090216910 A1